# EUROPEAN PATENT SPECIFICATION

(11) **EP 3 236 213 B1**
(45) Date of publication and mention of the grant of the patent: **16.10.2019**
(21) Application number: 17163177.3
(22) Date of filing: 27.03.2017
(51) Int. Cl.: G01C 23/00, G01S 7/20, G01S 7/12, G01S 13/89, G01S 13/87, G01S 13/94, G08G 5/00, G06T 15/04, G06T 15/08

(54) **COCKPIT DISPLAY FOR DEGRADED VISUAL ENVIRONMENT (DVE) USING MILLIMETER WAVE RADAR (MMWR)**
COCKPITANZEIGE FÜR SCHLECHTE SICHTVERHÄLTNISSE (DVE) MIT MILLIMETERWELLENRADAR (MMWR)
AFFICHAGE DE POSTE DE PILOTAGE POUR ENVIRONNEMENT VISUEL DÉGRADÉ UTILISANT UN RADAR À ONDES MILLIMÉTRIQUES

(30) Priority: 21.04.2016 US 201615135323
(43) Date of publication of application: 25.10.2017
(73) Proprietor: Honeywell International Inc., Morris Plains, NJ 07950 (US)
(72) Inventor: JOHN, Kishore Kumar, Morris Plains, NJ 07950 (US)
(74) Representative: Houghton, Mark Phillip

(56) References cited:
- EP-A2- 2 228 626
- US-A1- 2010 073 198
- US-B1- 7 675 461

## Description

### TECHNICAL FIELD

The disclosure relates to data processing of millimeter wave radar data to generate a graphical user display.

### BACKGROUND

Aircraft, including helicopters and other rotor craft, may need to operate in a degraded visual environment (DVE), which may be caused by darkness, dust, storm, sand, clouds, rain, blowing snow, mist, fog, or other factors. Some example situations where operating in a DVE may be necessary include rescue operations, medical evacuations (MEDEVAC), and military operations. In such situations, pilots may benefit from being able to identify obstacles such as cables, steep terrain, buildings, or other aircraft during flight or while landing. Systems installed in some aircraft may use a variety of sensors to detect and display hazards with varying degrees of success. For example, infra-red (IR) sensors have not been very successful when landing in a dusty environment subject to brown-out conditions (DVE from blown dust). EP2228626 discloses systems and methods which are provided for displaying information on a display device associated with an aircraft, comprising rendering a perspective view of terrain on a display device and obtaining sensor data for a sensing region overlapping at least a portion of the viewing region. US2010/073198 discloses a man-machine interface for assisting a pilot during take-off or landing of an airborne vehicle in reduced external visibility includes a display which represents a virtual scenario from the perspective of a virtual observer who is himself located behind the airborne vehicle and is in the same flight attitude as the airborne vehicle itself. US7675461 discloses a circuit for a display used on an aircraft causing the display to display a composite terrain image, which can be formed from first terrain data from a terrain database and second terrain data from a radar system. A display control circuit can generate a display signal for the composite terrain image and the display signal is received by the display.

### SUMMARY

The invention is set out in accordance with the appended claims. The disclosure relates to data processing of millimeter wave radar data to generate a graphical user display for an aircraft display system.

The details of one or more examples of the disclosure are set forth in the accompanying drawings and the description below. Other features, objects, and advantages of the disclosure will be apparent from the description and drawings, and from the claims.

### BRIEF DESCRIPTION OF DRAWINGS

FIG. 1A is a conceptual diagram illustrating an example three-dimensional depiction of a region around an aircraft, fixed to the position of an aircraft, in accordance with the techniques of this disclosure.
FIG. 1B illustrates an example three-dimensional region around an aircraft depicting example identified hazards, in accordance with one or more techniques of this disclosure.
FIGS. 2A and 2B are conceptual diagrams illustrating an example three-dimensional moving map display not fixed to the aircraft.
FIGS. 3A and 3B illustrate an example subdivision of the volumetric representation of airspace mapped to coordinate locations, in accordance with one or more techniques of this disclosure.
FIG. 4 is a conceptual and schematic block diagram illustrating an example aircraft synthetic vision system (SVS) with a radar signal processing device, in accordance with one or more techniques of this disclosure.
FIGS. 5A and 5B illustrate example sensor coverage of the three dimensional region of airspace around an aircraft, in accordance with one or more techniques of this disclosure.
FIG. 6 is a flowchart illustrating one or more techniques of this disclosure.
FIG. 7 is a flowchart illustrating one or more techniques of this disclosure.

### DETAILED DESCRIPTION

Techniques of this disclosure may enable an aircraft display system to depict a real-time display of a three-dimensional depiction of a region around an aircraft, where this three-dimensional depiction is fixed to the aircraft's coordinate location and attitude. As the aircraft moves in attitude (e.g. roll, pitch, or yaw), in altitude (e.g., climbing and descending), and/or laterally, the three-dimensional depiction may tilt and moves with the aircraft. The depiction of the region around an aircraft is depicted as a three-dimensional volumetric representation, such as a display cylinder, that identifies and prioritizes hazards in the region around the aircraft. The aircraft display system may combine data from a plurality of sensors into a composite, real-time, three-dimensional synthetic vision display that determines a priority for each hazard. The display will depict each hazard in a color code according to the priority for each hazard. This prioritized display that moves with movement of the aircraft may help to increase an aircraft operator's situational awareness.

Commercial and military aircraft, and even some ground vehicles, include various types of synthetic vision systems (SVS). Some SVSs may combine different technologies such as real-time sensors, previously gathered digital terrain data, and automated helicopter flight controls. Some systems may enable the pilot to "see" in a degraded visual environment (DVE) and guide the helicopter to a preset point or let the helicopter land itself while the pilot watches over the landing zone. Some examples of issues that pilots operating in DVE face include reduced peripheral vision from night vision goggles, brown-out or white-out conditions when landing in a dusty or snow environment, and hazards, such as vehicles, that move into a landing zone that may have previously seemed free of hazards. As one example, drifting in a dust cloud when close to touchdown may make helicopters prone to lateral rollover or ground collisions. In other words, a helicopter must normally touch down with no left-right movement. With any left-right movement, the skids or wheels may catch the ground, causing the helicopter to tilt over, resulting in the main rotors touching the ground or other obstacles. Such events may result in serious damage to the aircraft and/or injury to the aircraft operator.

Some systems that address these issues include laser-based landing systems that may provide to an aircraft operator information related to ground speed and drift, airspeed, altitude, wind speed, and direction on a cockpit hover display. Helicopter crews may learn to use cockpit hover symbology to make safe brownout landings and to make rolling landings to keep ahead of the dust cloud. Other systems include an "altitude hold hover stabilization system" capable of near-automatic landings. The system may fly the aircraft to a two- to three-foot hover over a programmed point, so the pilot can land safely. With precision hover symbology and enhanced flight controls, helicopter pilots may learn to interpret the symbology to operate in DVE, but such a system does not offer "see-through" capability for brownout (dust) or whiteout (snow) conditions.

Another technique for operating in a DVE may be to take a photograph of an area where the aircraft will be operating and overlay the photograph on a synthetic vision display (SVD) that may combine inputs from infra-red, electro-optical, radar and other sensors. The photograph may be taken weeks, days or seconds prior to the aircraft's expected arrival time at the location. Such a system may be called a "see-and-remember" photographic landing augmentation system. The crew "sees" the picture on display of the landing zone approach that may use a synthetic vision display. On the display, the photograph may be registered on the hidden landing zone along with altitude, height above ground, distance from landing zone, speed and heading symbology.

In one example, a "see-and-remember" system may use a high-resolution camera with other sensors such as an infrared strobe and laser rangefinder to image a landing zone seconds before the helicopter enters the brownout cloud. On the display, the image may be registered and overlaid on the hidden landing zone to create an approach display with altitude, height above ground, distance from landing zone, speed and heading symbology. The synthetic vision system may combine the photograph, along with input from other sensors into a display of the aircraft approaching the landing zone. See-and-remember systems may provide near real-time display using cues pilots can quickly interpret, but may not be able to detect small hazards or new hazards that appear, such as moving ground vehicles.

The techniques described in this disclosure may address some of the shortcomings of the systems described above. The techniques of this disclosure, used either individually or in conjunction with the systems described above, may improve the situational awareness for the aircraft operator. For example, during a landing approach, an aircraft with a see-and-remember system may show the approach display in near real-time. This near real-time approach display, combined with the real-time display cylinder fixed to the aircraft coordinate location in accordance with techniques of this disclosure, may provide the pilot significant situational awareness both of where the aircraft will be (in the approach display) and where the aircraft is now in real-time (from the display cylinder). A three-dimensional synthetic vision display cylinder, fixed to the aircraft, depicts each hazard, in a color code, according to the priority for each hazard with 360-degree coverage for survivability. In this way, the prioritized hazard display stays locked to movement of the aircraft, which may allow a pilot to quickly interpret nearby hazards and operate safely in a DVE.

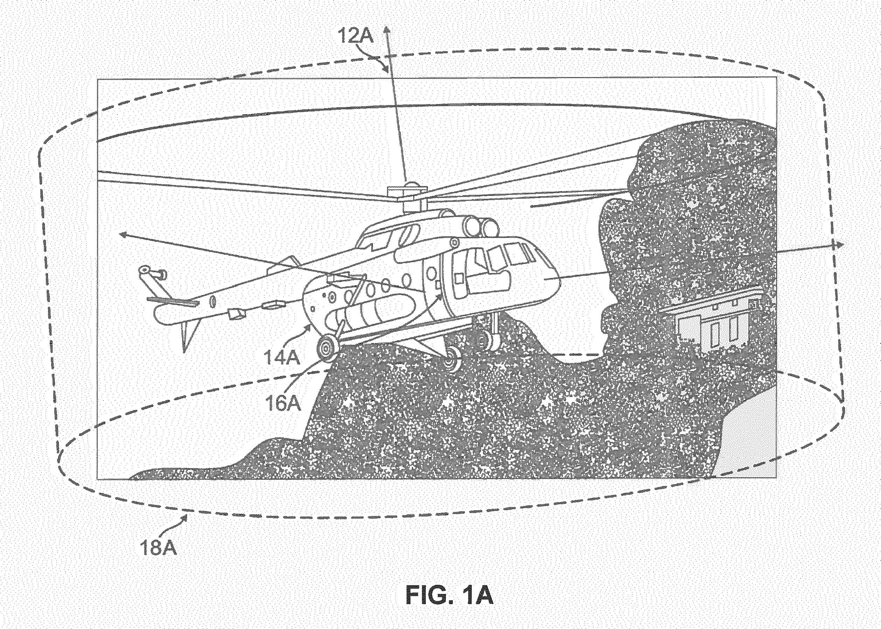

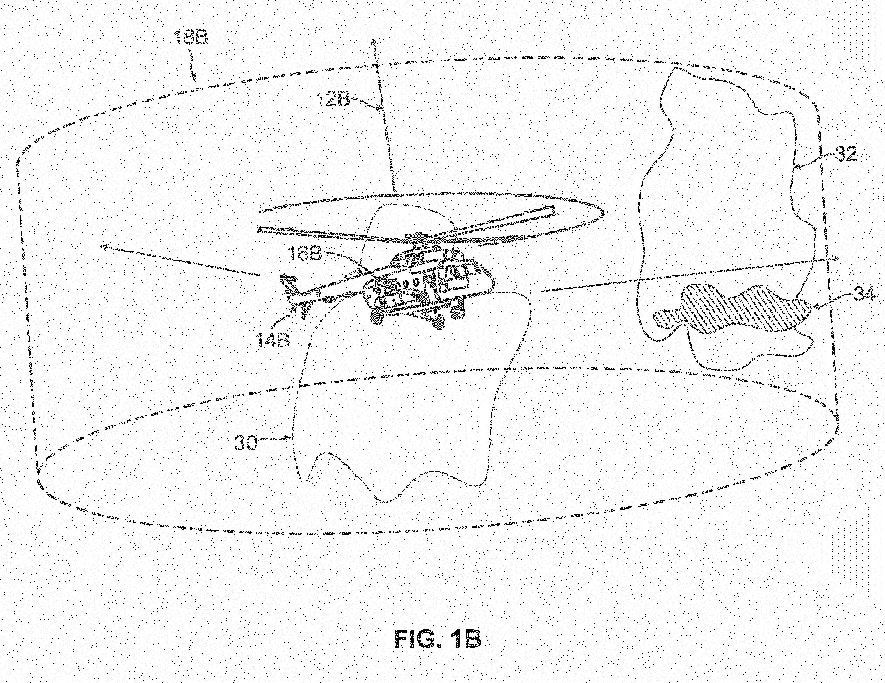

FIGS. 1A and 1B illustrate example display cylinders of the three dimensional region around an aircraft, fixed to the position of an aircraft, depicting example hazards, in accordance with one or more techniques of this disclosure. The display cylinder may present a 360-degree depiction with real time context based evidence to the pilot. FIG. 1A is a conceptual diagram depicting a helicopter 14A flying close to terrain. FIG. 1B depicts an example display cylinder 18B as it might be seen on a synthetic vision display. Helicopter 14A represents an example physical helicopter and helicopter 14B represents an example image of helicopter 14A as it might be depicted by the synthetic vision display. The figures depict three-axis coordinate systems 12A and 12B centered on coordinate locations 16A and 16B. FIG. 1B illustrates hazards 30, 32 and 34 as they might appear on the synthetic vision display to represent the hazards from the nearby terrain shown in FIG. 1A.

In this example, a three-axis coordinate system 12A and 12B and have the origin at coordinate locations 16A and 16B, shown in this example as at or near the center of aircraft 14A and 14B, respectively. In other examples, coordinate locations 16A and 16B may be set at any point near aircraft 14A and 14B. Some examples include placing coordinate location 16A at the forward-most point of aircraft 14A, the top of the main rotor or centered on the skids where the skids would touch the ground. FIG. 1B shows a display cylinder 18B according to the invention fixed to the coordinate location 16B of aircraft 14B, as well as fixed to the attitude of aircraft 14B. As aircraft 14B changes attitude in roll, pitch or yaw, display cylinder 18B moves with the attitude of aircraft 14B. The diameter or height of display cylinder 18B may be adjustable in response to inputs from the aircraft crew, or preset in the system based on the situational awareness and flying conditions.

A synthetic vision display system (not shown) inside the cockpit of helicopter 16A may present display cylinder 18A to the helicopter operator. example three-dimensional depiction of the physical volumetric region of airspace 18A around example helicopter 14A. Helicopter 14B may be a depiction within the synthetic vision display of the physical helicopter 14A of FIG. 1A. This depiction of a synthetic vision helicopter symbology may allow the helicopter flight crew to more easily interpret the display. The techniques of this disclosure may be compatible with SVS and other symbology that may already be familiar to flight crews.

In this example, FIG. 1B depicts display cylinder 18B centered on coordinate location 16B that corresponds to the example physical coordinate location 16A. Display cylinder 18B illustrates an example three dimensional depiction of the region around helicopter 14B containing hazards that could impact the helicopter operation. Hazards 30, 32, and 34 may, for example, be trees or terrain in the region around helicopter 14A of FIG. 1A. Display cylinder 18B may depict hazard 34 in a different color than hazard 32 if, for example, hazard 34 were closer to helicopter than hazard 32. In this way, display cylinder 18B identifies and prioritizes the hazards in the three dimensional region around helicopter 14B. Display cylinder 18B may therefore provide additional situational awareness for aircraft operating near hazards. Additionally, display cylinder 18B may be configured to identify and prioritize hazards as far as 500 - 1000 meters from the aircraft. The display may give the pilot adequate reaction time to respond to hazards, for example approximately 10-14 seconds.

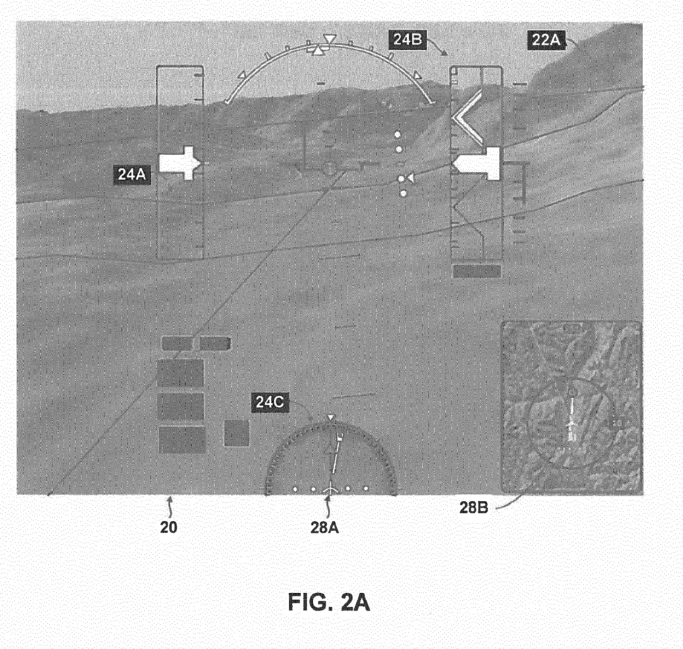

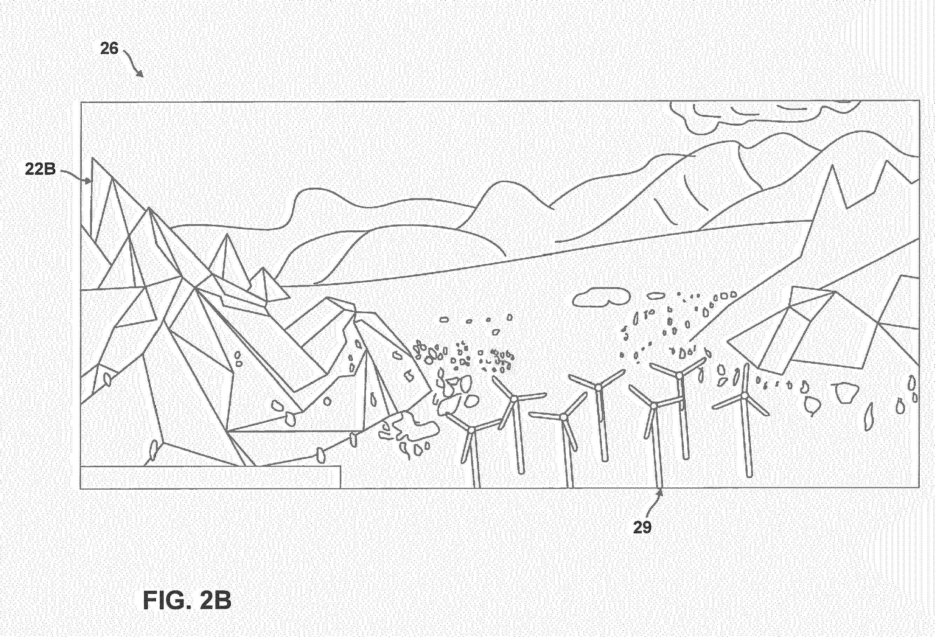

FIGS. 2A and 2B are conceptual diagram illustrating example three-dimensional moving map display not fixed to the aircraft that may be combined with a display cylinder, in accordance with one or more techniques of this disclosure. A moving map display may also be described as a three-dimensional approach display. Synthetic vision display (SVD) 20 depicts an example approach display of an aircraft operating in a valley. An approach display, like SVD 20, may include one or more symbols, 24A-24C that present flight information to the pilot. For example, 24C may present directional information, while 24B presents altitude information. SVD 20 may include depictions that look like the aircraft to help the pilot quickly and naturally interpret the display, such as the depictions of aircraft shown in 28A and 28B. In the example of SVD 20, aircraft depictions 28A and 28B are fixed wing aircraft.

SVD 20 may depict mountains 22A and other terrain on either side of a valley. The terrain information may be contained in a terrain database and be collected from plurality of sources that may be updated monthly, annually or at other intervals. For example, light detection and ranging (LIDAR) technology may map terrain by illuminating terrain with a laser and analyzing the reflected light. LIDAR mapping flights may be conducted over terrain as needed to update a terrain database.

SVD 26 depicts a synthetic vision approach display that may combine terrain information 22B with real-time or near real-time information from other sensors to show hazards 29 that may impact aircraft operation. For example, aircraft 14A may have a forward looking infra-red (FLIR) or a see-and-remember system, as described above. Unlike an infrared (IR) or electro-optical (EO) system, a system using millimeter wave radar (MMWR) as sensors may have the capability to penetrate the sand, dust, snow, rain, and other environmental hazards. The system may combine the terrain database information and sensor information and output a signal to the synthetic vision system as shown in SVD 26. In another example, an aircraft may be operating in a city with buildings, transmission towers and other hazards. Where SVDs 20 and 26 show mountains 22A and 22B, the same system operating in a city may show tall buildings, bridges and other hazards to, for example, a MEDEVAC helicopter taking a patient to a hospital. A terrain database that is updated every few months may include hazards such as buildings, factory chimneys, and electrical power transmission lines. However, the database may not include new construction or renovation where, for example, a tower crane may have been recently installed. An approach display, as shown in FIGS. 2A and 2B, combined with real-time display cylinder 18B may provide advantages for situational awareness for the helicopter flight crew. A combined display may present the moving map, or approach display, to assist the pilot with navigation and fixed buildings or terrain. A display cylinder may be combined with the moving map display by showing a pilot the volumetric depiction of the airspace around the aircraft and any hazards that may be near enough to cause harm. In this way the system may enhance survivability in DVE environments involving terrain following, cable and obstacle avoidance and collision avoidance with both natural and manmade hazards.

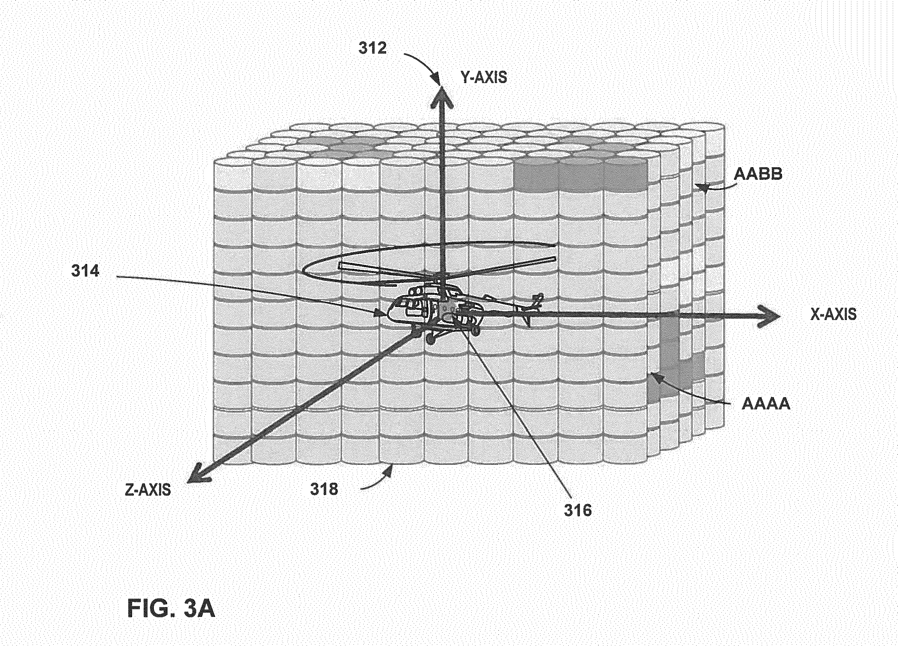

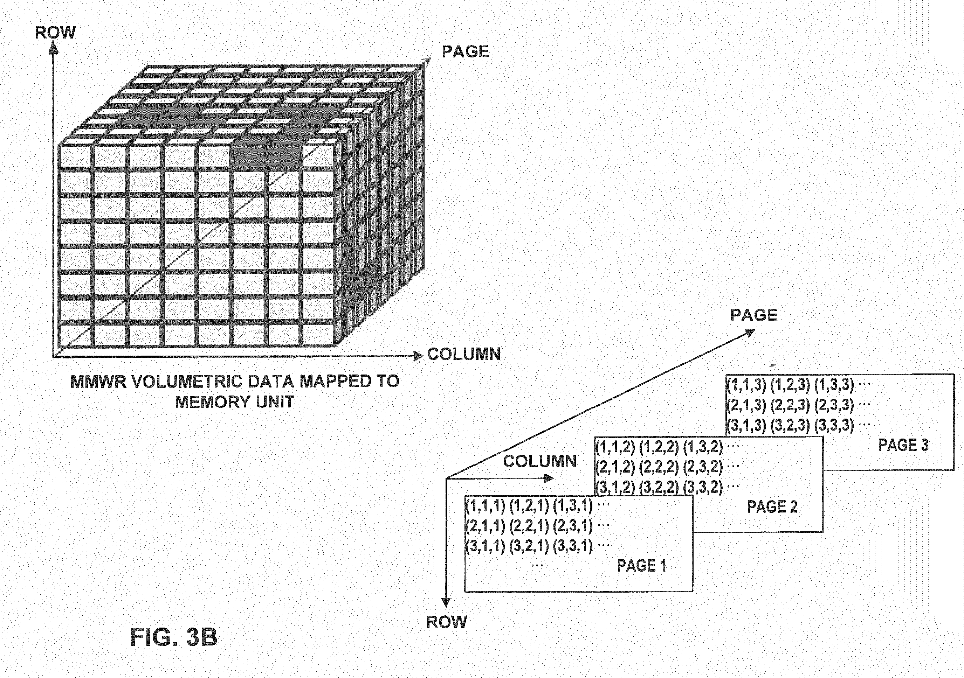

FIGS. 3A and 3B illustrate an example subdivision of the volumetric representation of airspace mapped to coordinate locations, in accordance with one or more techniques of this disclosure. FIGS. 3A and 3B depict an example technique to implement a display cylinder 18B as shown in FIG. 2B. FIG. 3A is a conceptual diagram illustrating an example technique to implement a display cylinder on a computing system, in accordance with techniques in this disclosure. FIG. 3A includes three-axis coordinates 312, aircraft symbology 314 located at coordinate location 316, and three dimensional representation of the region around the aircraft, 318. FIG. 3B illustrates an example technique to map the volume of airspace around aircraft symbology 314 to a memory location within a processor.

In this example, the three-dimensional region 318 around the aircraft may be considered a volumetric representation of airspace. The volumetric representation may be considered a cylinder, cube, or any other three dimensional shape. Each point in the volumetric representation may be mapped by in relation to a central point, such as coordinate location 316. This is similar to coordinate location 16 from FIG. 1. The volumetric representation of airspace 318 may be further divided into a plurality of sub units. The example of FIG. 3A shows a plurality of sub-cylinders containing smaller portions of the airspace. Each sub-cylinder may be designated by its position relative to aircraft coordinate location 316. The example of FIG. 3A shows a three-axis coordinate system 312. In a three-axis coordinate system example, each sub-cylinder location may designated by three groups of numbers indicating the sub-cylinder position. For example, the system may designate sub-cylinder AAAA as (Xa, Ya, Za) and sub-cylinder AABB as (Xb, Yb, Za).

In other examples, each sub-cylinder position may be designated by spherical coordinates. A system using spherical coordinates may designate each sub-cylinder location as a distance and angle from aircraft coordinate location 316, such as radial, azimuth, and polar. The radial may be the distance from aircraft coordinate location 316 and the azimuth and polar may be the horizontal and vertical angles. So, for example sub-cylinder AAAA may be designated as (Rₐ, θₐ, φₐ) and sub-cylinder AABB as (R_{b}, θ_{b}, φ_{b}).

Each sub-cylinder may be further mapped to a three-dimensional memory matrix shown in FIG. 3B that may be used by an aircraft display processor to identify and prioritize hazards. Each sub-cube may have its own unique address within a processor's memory. Each sub-cube may hold specific data, be memory addressable and be updated independently and randomly. As the aircraft 3D display processor gathers data from the plurality of sensors it may identify and designate each sub-cube as either containing a hazard or not containing a hazard. The aircraft display processor may further translate the sub-cubes in memory to the sub-cylinders in the display. The processor may prioritize each sub-cylinder and assign a color based on priority depending on the distance from the aircraft, how fast the hazard is moving compared to the aircraft and if it is moving toward or away from the aircraft and other factors. In this way, the display may present evidence to the pilot, giving the pilot context based situational awareness (SA) for adequate time to react to hazards.

As shown in FIG. 3A, a plurality of sub-cylinders, each with designated sub-cylinder location coordinates may identify the location and size of hazard 32, shown in FIG. 1B. The display processor may map the sub-cylinders that identify hazard 32 to the three-dimensional matrix that may be used by an aircraft 3D display processor to identify and prioritize hazard 32. The display processor may color code the sub-cylinders of hazard 32 according to an identified priority and present the image to the helicopter crew on a synthetic vision display. Similarly, the display processor may determine the size and location of hazard 34, map and color code the sub-cylinders with a different priority color code compared to hazard 32 and display the both images on the synthetic vision display. In one example, hazard 34 may be closer and more dangerous to the helicopter and may be colored red. Hazard 32 may be further away, but still of concern, so the display may color it yellow. Other areas that are not of concern may be colored green.

Techniques to implement a three-dimensional depiction of a region around an aircraft may include the display cylinder described above as well as other techniques to depict a volumetric representation of airspace on a computing system. Some examples include a rectangular cube shape made up of a plurality of sub-cubes or any other three-dimensional shape. Also, computing system may implement display of the region around an aircraft by using the three-axis or spherical coordinate systems described above, as well as any other viable technique to designate locations in three-dimensional space. Any similar volumetric representation of the airspace may be mapped to a three-dimensional memory location within a processor. The processor may perform calculations and functions using the three dimensional matrix.

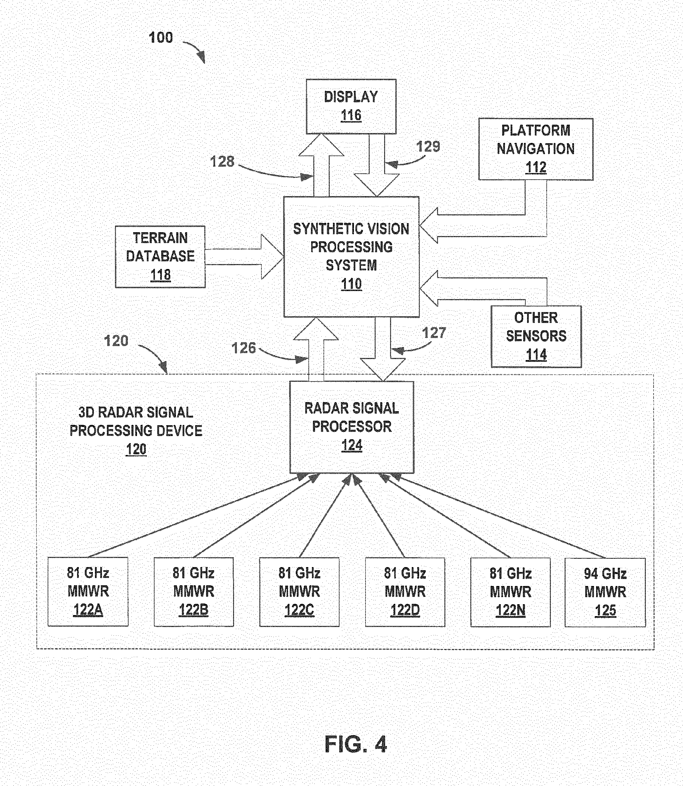

FIG. 4 is a conceptual and schematic block diagram illustrating an example aircraft synthetic vision system (SVS) with a radar signal processing device, in accordance with one or more techniques of this disclosure. SVS 100 includes synthetic vision processing system 110, aircraft platform navigation systems 112, other sensors 114, display 116, terrain database 118, and 3D radar signal processing device 120. 3D radar signal processing device 120 includes short-range (e.g. 81 GHz) MMWR 122A - 122N, long-range (e.g. 94 GHz) MMWR 125, and radar signal processor 124.

Synthetic vision processing system 110 is configured to receive inputs from aircraft platform navigation systems 112, terrain database 118, 3D radar signal processing device 120, and other sensors 114. Synthetic vision processing system 110 is further configured to transmit display signal 128 to display 116, which is operatively coupled to synthetic vision processing system 110. Synthetic vision processing system 110 may receive display control signal(s) 129 in response to input from an operator, such as a flight crew member, used to control the size, contrast or other features of display 116.

Radar signal processing device 120, not forming part of the claimed invention, may transmit radar image signal 126 to synthetic vision processing system 110 and receive radar control signal 127. The platform navigation system 112 may, for example, include a global positioning system (GPS), gyroscope and accelerometer based instruments that provide aircraft attitude, direction and position information, along with other navigation systems such as VHF omnidirectional range (VOR) systems. Platform navigation system 112 may, for example, include systems such as electronic warfare (EW), weapon systems and command, control, communications, computers, intelligence, surveillance and reconnaissance systems. Other sensors 114 may, for example, include forward looking infra-red (FLIR), laser range finders, traffic collision avoidance systems (TCAS), and similar devices.

Radar signal processor 120 may receive inputs from a suite of radar receivers 122A - 122N and 125. In the example of FIG. 4, five shorter range, high resolution, 81 GHz MMWR may be installed at the four sides and bottom of the aircraft to detect short range obstacles. 81GHz MMWR 122A - 122N may be configured based on an interferometric pattern (one transmitter and two receivers). Interferometric radar deployment is a technique that may enable radar signal processing device 120 to generate three-dimensional (3D) radar reflection signal of the region around the aircraft. 81 GHz MMWR 122A-122N may, for example, be capable of detecting obstacles with radar cross-section of about 25 - 50 mm within approximately 500 meters range under the DVE conditions. 81 GHz MMWR 122A-122N may be used to detect the volumetric region around the helicopter ranging as large as approximately four to five times the rotor size. This may provide real time volumetric cylindrical protection shield in the short range under DVE operation. The operator may be able to select the size of the volumetric cylindrical protection shield based on the type of mission under the DVE operations. The 360° coverage using 81 GHz MMWR concept may be extended for unmanned aerial vehicles (UAVs) such as in sense and avoid flight capability in DVE operations. Such a system may have advantages for non-deterministic flight behavior, such as adapting to unforeseen situations. UAVs may include both fixed wing and rotorcraft UAVs.

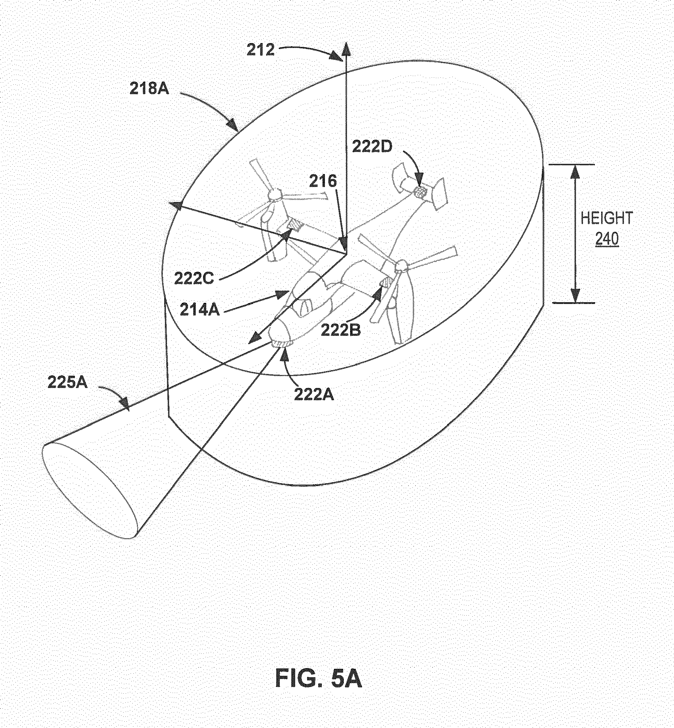

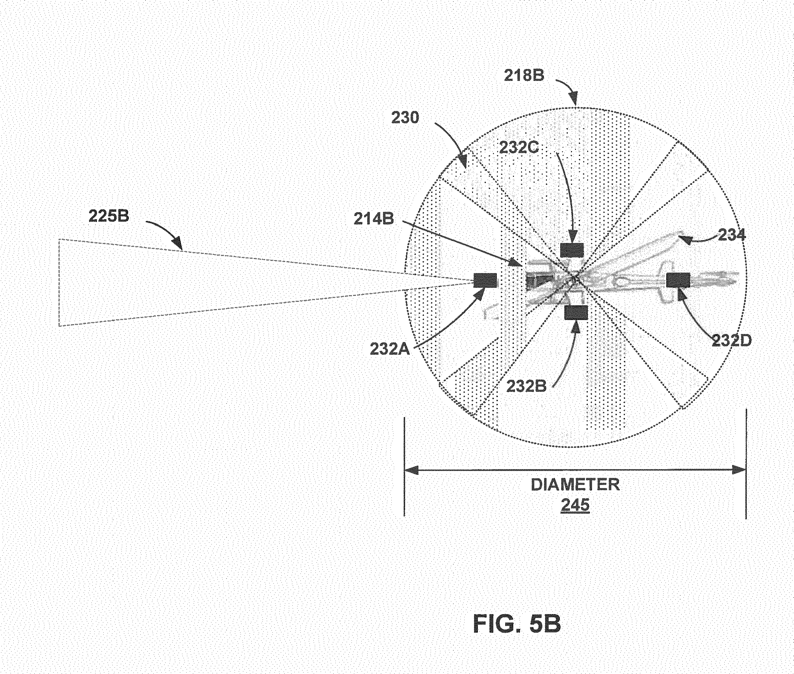

Radar signal processing device 120 may correlate details of the 3D data according to a 3D correlation algorithm to provide 3D radar image signal 126. Radar signal processor 124 may use radar data fusion and 3D processing from the shorter range MMWR receivers 122A - 122N to provide the 360° volumetric coverage for the helicopter or other rotary wing aircraft. While the example of FIG. 4 depicts five short range 81GHz MMWR receivers, radar signal processing device 120 may be configured to use less than five or more than five radar receivers. For example, a particular aircraft, such as a tilt rotor aircraft may be configured with five short range radar receivers. However, depending on the wing, fuselage and tail configuration, a tilt-rotor aircraft may need more than five short range receivers to get full 360-degree volumetric coverage. This will be discussed further in FIG. 5.

Synthetic vision processing system 110 may receive 3D radar image signal 126 and combine it with the signals from terrain database 118, platform navigation 112 and other sensors 114. Synthetic vision processing system 110 may translate the various signals into a display signal 128 for output to display 116. Display signal 128 may cause display 116 to display a three-dimensional depiction of a region around the aircraft, as described above in FIG. 2B for display cylinder 18B. Display 116 may present display cylinder 18B on a separate screen, as part of a moving map approach display or as an inset similar to that shown by item 28B in FIG. 2B. This combined display that includes the moving map approach display, shown in FIG. 2B along with display cylinder 18B shown in FIG. 1B may give improved context situational awareness to an aircraft flight crew over the situational awareness provided by the moving map approach display alone.

As discussed above, display cylinder 18B stays fixed to the aircraft attitude and coordinate location 16B. Synthetic vision processing system 110 may rotate and tilt display cylinder 18B to match the attitude of the aircraft based on signals from instruments using gyros and accelerometers that detect aircraft roll, pitch and yaw. These roll, pitch and yaw signals may come from platform navigation 112 and from other sensors 114. For example, during an approach to a landing zone, a helicopter may need to make a steep approach. Unlike a fixed wing aircraft that may approach a landing zone with the aircraft's nose pitched below the horizontal on a steep approach, a helicopter, or other rotorcraft, may approach the landing zone with the aircraft nose pitched substantially above the horizontal. The roll, pitch and yaw instruments within platform navigation 112 and other sensors 114 may detect the helicopter's nose-up attitude and send signals to synthetic vision processing system 110, which may rotate display cylinder 18B to match the helicopter attitude. Synthetic vision processing system 110 may adjust the location within the three-dimensional matrix (shown in FIG. 3B) of any hazards from radar image signal 126 to display the relative position of the hazard as the aircraft moves. In other words, synthetic vision processing system 110 may adjust both the angle of the three-dimensional matrix within memory and change the color codes of each sub-cylinder as needed to display the location and priorities of any hazards to the flight crew.

Display 116 may have a display control (not shown) which may be composed of soft-keys, touch screen, keypad or other similar input device. Display 116 may be a multi-function display (MFD) or a primary function display (PFD). This disclosure may refer to display 116 as a "display device." The terms "display" and "display device" may be used as interchangeable nouns, unless context uses "display" as a verb. Synthetic vision processing system 110 may cause either the MFD or the PFD to display symbology, images or other information. For example, synthetic vision processing system 110 may cause the PFD to show cylinder display 18B, as shown in FIG. 1B. The display control may allow the flight crew to make adjustments to contrast, zoom, view angle and other features of display 116. The display control may be used to adjust the size and height of display cylinder 18B, which will be discussed in more detail in FIG. 5. Synthetic vision processing system 110 may receive display control signals 129, and in response, may translate display control signals 129 into one or more output signals. For example, one output signal may include radar control signal 127 that may cause radar signal processing device 120 to adjust the transmit power, sensitivity, angle, frequency and other parameters of the MMWR suite 122A-122N and 125 to increase or decrease the range and resolution the MMWR suite. Another output signal may include display signal 128 that may cause display 116 to change the diameter and height of display cylinder 18B.

FIG. 4 also shows a long-range 94GHz MMWR 125 that may send signals to radar signal processer 124. FIG. 4 depicts the 94GHz MMWR 125 as part of 3D radar signal processing device 120, however, in other examples, a long range radar may be separate from 3D radar signal processing device 120, and send signals directly to synthetic vision processing system 110 or to some other processor. 94GHz MMWR 125 may be a forward-looking MMWR radar with an interferometric pattern and may be deployed at the nose of the helicopter. The interferometric radar, as described above, may provide long range 3D radar coverage with a range 4-5 Km. This disclosure discusses the 94GHz MMWR for longer range detecting as one example. The techniques of this disclosure may also be combined with other medium to long range radars with radar coverage of 1 km to 10 km or more. The 94GHz MMWR 125 may provide signals used by radar signal processor 124 and further used by synthetic vision processing system 110 to add real-time 3D images to the moving map approach display. For example, 94GHz MMWR 125 may be able to detect a landing zone or provide real time target identification capability during DVE operations. During landing 94GHz MMWR 125 may identify buildings, towers and moving vehicles near the landing zone to enhance safety. In military targeting operations, 94GHz MMWR 125 may identify specific characteristics of a target that may improve lethality as well as improve identification to minimize collateral damage. This longer range radar may be considered part intelligence, surveillance and reconnaissance (ISR) for target detection under DVE conditions. Signals from 94GHz MMWR 125, combined with a display cylinder generated by short range 81GHz MMWR 122A-122N, such as a see-and-remember system discussed above, may provide improve safety for survivability and increase likelihood of mission success when an aircraft is operating in DVE conditions.

Note that although the example of FIG. 4 depicts short range MMWR as 81 GHz, other radar configurations, such as 76 GHz, may be used as part of 3D radar signal processing device 120. Similarly, although the example of FIG. 4 depicts long range MMWR as 94 GHz, other radar configurations may be used. Also, although the example of FIG. 4 depicts the functions of SVS 100 as separate functional blocks, these functions may be combined and integrated, or be divided into different functional blocks. For example, platform navigation 112 and terrain database 118 may be combined into a single device. In other examples, some instruments described above as being part of platform navigation 112 may actually be within other sensors 114.

FIGS. 5A and 5B illustrate example sensor coverage of the three dimensional region of airspace around an aircraft, in accordance with one or more techniques of this disclosure. FIG. 5A illustrates an example tilt-rotor aircraft 214A with short-range 81 GHz MMWR 222A-222D on the nose, wings and tail. Aircraft 214A may also have an 81GHz MMWR mounted underneath the fuselage to get images below aircraft 214A. The 81 GHz MMWR suite 222 may send signals to radar signal processor 124 to generate a display signal 126 that may generate display cylinder 218A. In the example of FIG. 5A, display cylinder 218A is centered on aircraft coordinate location 216 and uses a three-axis coordinate system 212. Synthetic vision processing system 110 may adjust the height 240 of display cylinder 218A in response to inputs from the aircraft flight crew. In one example, to provide situational awareness while flying through a valley, the flight crew may provide inputs through the display controls (not shown) to increase the height 240. Synthetic vision processing system 110 (shown in FIG. 4) may send control signals to radar signal processor 124 that may further adjust the power setting, transmission angle and other settings of 81 GHz MMWR suite 222 as well as the radar image signal 126 to control the height 240 of display cylinder 218A.

For example, an aircraft in DVE conditions may need to operate by "whisker flying." Whisker flying means operating by references only as far as sensors can detect. The term comes from animals such as cats, mice or cockroaches that have whiskers or antennae. A cat for example, may navigate a maze and will be able to know whether the cat can squeeze through a small opening before it is stuck. The cat's whiskers detect how far the cat is from a wall and how wide an opening is, even in total darkness. Similarly, a mouse may determine whether it can fit under a door or through a small opening by sensing the size of the opening with the mouse's whiskers. In the same way, an aircraft pilot may determine how to safely navigate through a valley, or series of buildings, by consulting the synthetic vision system. Depending on the circumstances, the aircraft pilot may adjust the size of the display, as described by this disclosure, to provide the best information to safely navigate and complete the mission.

FIG. 5A also depicts forward looking, long range 94 GHz MMWR 225A. The 94 GHz MMWR 225A may provide real-time 3D image information to radar signal processor 124 and further to synthetic vision processing system 110. Synthetic vision processing system 110 may output a signal causing a display to present a 3D image of the long range object to the flight crew. For example, 94 GHz MMWR 225A may be configured to detect and identify a landing zone or targeting objects ahead of aircraft 214A, as described above.

FIG. 5B illustrates an example helicopter 214B with short-range 81 GHz MMWR 232A-232D on the nose, left and right fuselage, and tail. MMWR 232A-232D may be positioned such that the plurality of MMWR receiver units receive three dimensional radar reflection signals from a forward region, a back region, a left region, and a right region relative to the aircraft coordinate location. As described above for FIG. 5A, aircraft 214B may also have an 81GHz MMWR mounted underneath the fuselage to collect 3D images below aircraft 214B. When combined, 81 GHz MMWR suite 232 may provide a radar display signal to generate a display cylinder 218B. The individual 81 GHz MMWR coverage area may overlap. This is indicated as four overlap zones 230 in the example of FIG. 5B. Radar signal processor 124 (shown in FIG. 4) may be configured to correctly process the radar signals with overlap zones 230. FIG. 5B also depicts forward looking, long range 94 GHz MMWR 225B, which is similar to 225A described above.

Synthetic vision processing system 110, as shown in FIG. 4, may adjust the diameter 245 of display cylinder 218A in response to inputs from the aircraft flight crew. As with the height 240 example above, the flight crew may provide inputs through the display controls (not shown) to increase or decrease diameter 245. The input may select diameter 245 based on a multiple of the rotor 234 diameter. For example, while flying in a valley, the flight crew may select a larger diameter such as four times (4x) or five times (5x) the rotor diameter 234. In another example, the input may select diameter 245 based on a specified distance such as 30 meters or 100 meters. For example, when landing in a space-constrained landing zone, the flight crew may reduce diameter 245, which may reduce distractions of hazards far from the aircraft. Reducing diameter 245 may also increase the resolution of the display cylinder to be able to identify and prioritize smaller object, such as power cables. In response to the flight crew inputs, synthetic vision processing system 110 may send control signals to radar signal processor 124 that may further adjust the power setting, transmission angle and other settings of 81 GHz MMWR suite 222 as well as the radar image signal 126 to control diameter 245.

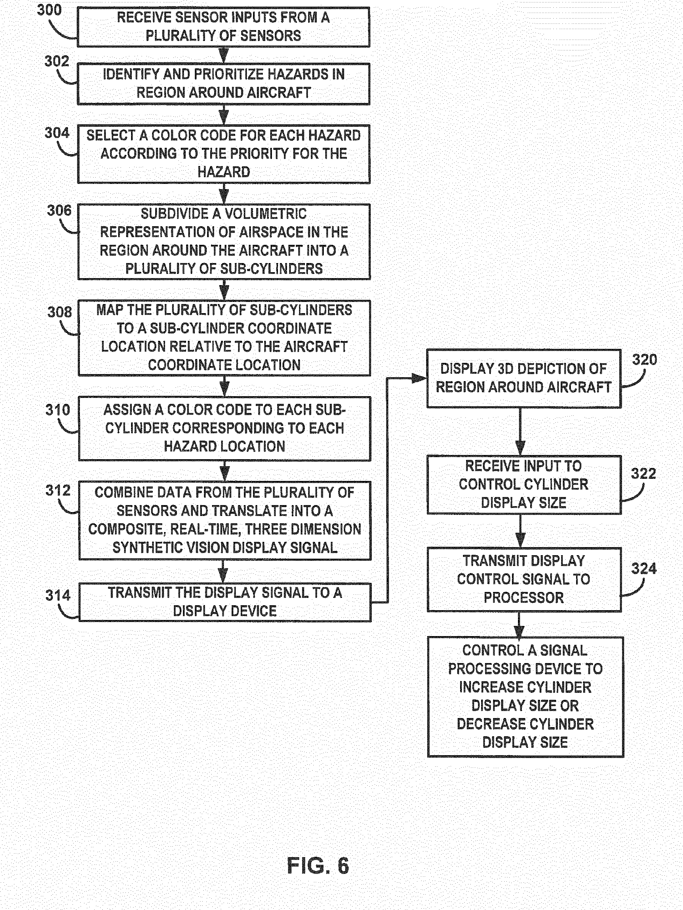

FIG. 6 is a flowchart illustrating one or more techniques of this disclosure. The techniques of FIG. 6 will be described with respect to SVS 100 of FIG. 4 as well as FIGS. 2A- 2B, although the techniques of FIG.6, and the techniques of this this disclosure more generally, are not limited to any specific type of system. Synthetic vision processing system 110 may receive sensor inputs from a plurality of sensors including radar signal processing device 120 and other sensor 114 (300). Synthetic vision processing system 110 identifies and prioritizes hazards in the region around an aircraft, such as helicopter 14A from FIG. 2A (302). Synthetic vision processing system 110 assigns a color code to each hazard according to the priority for each hazard (304), for example, hazards 32 and 34 of FIG. 2B.

Synthetic vision processing system 110 may subdivide a volumetric representation of the airspace in the region around the aircraft into a plurality of sub-cylinders (306). Though the example of FIG. 6 describes dividing volumetric representation of the airspace into sub-cylinders, in other examples, synthetic vision processing system 110 may subdivide the region into a plurality of cubes, rectangular boxes or any other three-dimensional shape. Synthetic vision processing system 110 may map the plurality of sub-cylinders to a sub-cylinder coordinate location relative to the aircraft coordinate location (308). For example, FIGS. 2A- 2B depict example aircraft coordinate locations as 16A and 16B. Each sub-cylinder may have a designated coordinate location, as described above for FIG. 3.

Synthetic vision processing system 110 may assign a color code to each sub-cylinder corresponding to each hazard location (310). In the example of FIG. 2B, sub-cylinders corresponding to hazard 32 may be at coordinate locations in front-left of helicopter 14B and be assigned the color code appropriate for hazard 32. For hazard 34, there may be fewer sub-cylinders assigned the color code for hazard 34 because hazard 34 is smaller than hazard 32, as shown in the example of FIG. 2B.

Synthetic vision processing system 110 may combine data from the plurality of sensors and translate into a composite, real-time, three-dimensional synthetic vision display signal (312). Synthetic vision processing system 110 may further transmit the display signal to display 116 (314). The display signal may cause display 116 to display a three-dimensional depiction of a region around an aircraft (320), where the display may include a display cylinder, such as display cylinder 18B depicted in FIG. 2B. Display 116 may also present a moving map approach display 20, such as that shown in FIG. 1B.

Display 116 may have a display control (not shown), which may receive inputs from an operator, such as a helicopter pilot or other crew member (322). The display control may send display control signal 129 to synthetic vision processing system 110 (324), which may further may translate display control signals 129 into one or more output signals. These one or more output signals may control a signal processing device to increase or decrease the size of display cylinder 18A.

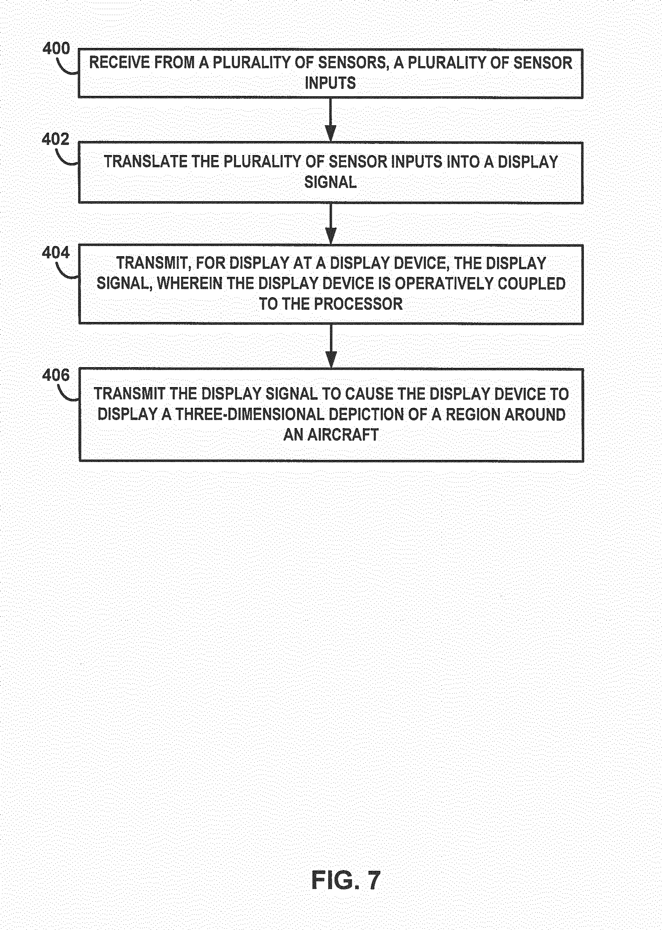

FIG. 7 is a flowchart illustrating one or more techniques of this disclosure. The techniques of FIG. 7 will be described with respect to SVS 100 of FIG. 4 as well as FIGS. 1A and 1B, although the techniques of FIG.7, and the techniques of this this disclosure more generally, are not limited to any specific type of system. Synthetic vision processing system 110 may receive from a plurality of sensors, a plurality of sensor inputs (400). For example, synthetic vision processing system 110 may receive inputs from terrain database 118, radar signal processor 124 and other sensors 114.

Synthetic vision processing system 110 may translate the plurality of sensor inputs into a display signal (402) and transmit the display signal to display 116 (404). As noted above in FIG. 4, the display device, e.g. display 116, is operatively coupled to synthetic vision processing system 110. Display 116 may, for example, be a PFD or a MFD or other type of display that shows information to an operator, such the flight crew.

Display signal 128 transmitted to the display device 116 causes the display device to display a three-dimensional depiction of a region around an aircraft (406). The three-dimensional depiction of the region around the aircraft is a volumetric representation, such as a display cylinder as shown in the example of FIG. 1B (406). Display 116 may additionally depict an approach display as shown in the example of FIG. 2A that may provide a pilot with information on a landing zone, navigation information to get the aircraft to its destination and in some examples provide targeting information, such as for military operations.

Further in conjunction with the techniques of FIG. 7, the display cylinder dentifies and prioritizes hazards in the region around the aircraft. For example, radar signal processor 124 may detect buildings, structures, or terrain near the aircraft that may pose a hazard. Radar signal processor 124 may determine how close a hazard is and how quickly the hazard is moving relative to the aircraft. Radar signal processor 124 may transmit that information, updated in real-time or near real-time, to synthetic vision processing system 110. Synthetic vision processing system 110 processes the information from radar signal processor 124 to identify and prioritize the hazards in the region around the aircraft.

The display signal 128 from synthetic vision processing system 110 may fix the display cylinder 18B to the aircraft coordinate location 16B and the aircraft attitude, as depicted in the examples of FIGS. 1A and 1B. For example, the example of FIG. 1B shows helicopter 16B with a nose-up attitude and cylinder display 18B matching this attitude. If the helicopter changes to nose-down, e.g. to pick up speed, or banks left or right, cylinder display 18B moves to match helicopter 16B's attitude.

Synthetic vision processing system 110 may also adjust the size of cylinder display in response to inputs by an operator. Synthetic vision processing system 110 may receive display control signals 129 in response to input from an operator to change the size of cylinder display 18B. The size may depend on the circumstances. For example, if landing on a hospital helipad where there may be buildings nearby, the operator may choose a smaller size than if conducting "whisker flying" operations in a valley.

In one or more examples, the functions described may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, FPGA, solid state memory, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. It should be understood, however, that computer-readable storage media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, general purpose graphics processor, high speed backplane, high speed RAPID IO or PCIe, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for encoding and decoding, or incorporated in a combined codec. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperable hardware units, including one or more processors as described above, in conjunction with suitable software and/or firmware, such as real-time operating system software.

Various embodiments of the disclosure have been described. These and other embodiments are within the scope of the following claims.

## Claims

1. An aircraft display system comprising:
a plurality of sensors (114, 122A-125); and
one or more processors (110) configured to:
receive a plurality of sensor inputs from the plurality of sensors (114, 118, 120);
translate the plurality of sensor inputs into a signal (128); and
output the signal for display at a display device (116) operatively coupled to the one or more processors (110),
wherein the signal output to the display device causes the display device to display a three-dimensional depiction (18B, 218A) of a region (18A) around an aircraft (14A, 14B, 214A),
wherein the three-dimensional depiction of the region around the aircraft comprises a display cylinder (18B, 218A) depicting a volumetric representation of the three-dimensional region (18A) around the aircraft (14A, 14B, 214A);
wherein the one or more processors (110) are further configured to identify hazards (30, 32, 34) in the three-dimensional region around the aircraft and fix the volumetric representation to an aircraft coordinate location and an aircraft attitude,
wherein as the aircraft (14A, 14B, 214A) changes attitude in roll, pitch or yaw, the display cylinder moves with the attitude of the aircraft, and
wherein the system determines a priority for each hazard (30, 32, 34) and in the three-dimensional depiction of the region around the aircraft displays each hazard (30, 32, 34) in a color code according to the priority for each hazard (30, 32, 34).

2. The aircraft display system of claim 1, wherein the one or more processors are further configured to identify hazards (30, 32, 34) in the region around the aircraft by combining data from the plurality of sensors.

3. The aircraft display system of claim 1, wherein, in response to inputs by an operator, a size of the volumetric representation of the three-dimensional region (18A) around the aircraft is configurable, such that the inputs by the operator increase or decrease a size of the display cylinder (18B, 218A).

4. The aircraft display system of claim 1, wherein the plurality of sensors comprises a plurality of millimeter wave radar (MMWR) receiver units (232B, 232C, 232D) configured to generate three-dimensional radar reflection signals, and, wherein at least one of the plurality of MMW radar receiver units (232B, 232C, 232D) is configured to detect objects at least four km relative to the aircraft coordinate location.

## Patentansprüche

1. Luftfahrzeuganzeigesystem, umfassend:
eine Vielzahl von Sensoren (114, 122A bis 125); und
einen oder mehrere Prozessoren (110), die konfiguriert sind zum:
Empfangen einer Vielzahl von Sensoreingaben von der Vielzahl von Sensoren (114, 118, 120);
Übersetzen der Vielzahl von Sensoreingaben in ein Signal (128); und
Ausgeben des Signals für eine Anzeige in einer Anzeigevorrichtung (116), die funktionsfähig mit dem einen oder den mehreren Prozessoren (110) verbunden ist,
wobei die Signalausgabe zur Anzeigevorrichtung, die Anzeigevorrichtung veranlasst, eine dreidimensionale Darstellung (18B, 218A) eines Bereichs (18A) um ein Luftfahrzeug (14A, 14B, 214A) anzuzeigen,
wobei die dreidimensionale Darstellung um das Luftfahrzeug einen Anzeigezylinder (18B, 218A) umfasst, der eine volumetrische Darstellung des dreidimensionalen Bereichs (18A) um das Luftfahrzeug (14A, 14B, 214A) darstellt;
wobei der eine oder die mehreren Prozessoren (110) außerdem konfiguriert sind zum Identifizieren von Gefahren (30, 32, 34) in dem dreidimensionalen Bereich um das Luftfahrzeug und zum Festlegen der volumetrischen Darstellung auf einen Luftfahrzeugkoordinatenort und auf eine Luftfahrzeugstellung,
wobei sich der Anzeigezylinder, wenn das Luftfahrzeug (14A, 14B, 214A) die Stellung durch ein Rollen, Nicken oder Gieren verändert, mit der Stellung des Luftfahrzeugs bewegt, und
wobei das System eine Priorität für jede Gefahr (30, 32, 34) ermittelt und in der dreidimensionalen Darstellung des Bereichs um das Luftfahrzeug jede Gefahr (30, 32, 34) in einem Farbcode gemäß der Priorität für jede Gefahr (30, 32, 34) anzeigt.

2. Luftfahrzeuganzeigesystem nach Anspruch 1, wobei der eine oder die mehreren Prozessoren außerdem konfiguriert sind zum Identifizieren von Gefahren (30, 32, 34) in dem Bereich um das Luftfahrzeug durch ein Kombinieren der Daten von der Vielzahl von Sensoren.

3. Luftfahrzeuganzeigesystem nach Anspruch 1, wobei als Reaktion auf Eingaben von einem Bediener eine Größe der volumetrischen Darstellung des dreidimensionalen Bereichs (18A) um das Luftfahrzeug so konfigurierbar ist, dass die Eingaben durch den Bediener eine Größe des Anzeigezylinders (18B, 218A) vergrößern oder verkleinern.

4. Luftfahrzeuganzeigesystem nach Anspruch 1, wobei die Vielzahl von Sensoren eine Vielzahl von Empfängereinheiten eines Millimeterwellenradars (MMWR-Empfängereinheiten) (232B, 232C, 232D) umfasst, die konfiguriert sind zum Erzeugen von dreidimensionalen Radarreflexionssignalen, und wobei mindestens eine aus der Vielzahl von MMW-Radarempfängereinheiten (232B, 232C, 232D) konfiguriert ist zum Erkennen von Gegenständen innerhalb von mindestens vier km relativ zu dem Luftfahrzeugkoordinatenort.

## Revendications

1. Système d'affichage pour aéronef, comprenant :
une pluralité de capteurs (114, 122A-125) ; et
un ou plusieurs processeurs (110) configurés pour :
recevoir une pluralité d'entrées de capteurs en provenance de la pluralité de capteurs (114, 118, 120) ;
convertir la pluralité d'entrées de capteurs en un signal (128) ; et
délivrer en sortie le signal en vue de son affichage au niveau d'un dispositif d'affichage (116) couplé fonctionnellement aux un ou plusieurs processeurs (110),
le signal délivré en sortie au dispositif d'affichage amenant le dispositif d'affichage à afficher une illustration tridimensionnelle (18B, 218A) d'une région (18A) entourant un aéronef (14A, 14B, 214A),
l'illustration tridimensionnelle de la région entourant l'aéronef comprenant un cylindre d'affichage (18B, 218A) illustrant une représentation volumétrique de la région tridimensionnelle (18A) autour de l'aéronef (14A, 14B, 214A) ;
les un ou plusieurs processeurs (110) étant configurés en outre pour identifier des dangers (30, 32, 34) dans la région tridimensionnelle entourant l'aéronef et caler la représentation volumétrique sur une position en coordonnées de l'aéronef et une attitude de l'aéronef,
à mesure que l'aéronef (14A, 14B, 214A) change d'attitude en roulis, tangage ou lacet, le cylindre d'affichage se déplaçant en fonction de l'attitude de l'aéronef, et
le système déterminant une priorité pour chaque danger (30, 32, 34) et, dans l'illustration tridimensionnelle de la région entourant l'aéronef, affichant chaque danger (30, 32, 34) dans un code couleur selon la priorité pour chaque danger (30, 32, 34) .

2. Système d'affichage pour aéronef selon la revendication 1, dans lequel les un ou plusieurs processeurs sont configurés en outre pour identifier des dangers (30, 32, 34) dans la région entourant l'aéronef en combinant des données en provenance de la pluralité de capteurs.

3. Système d'affichage pour aéronef selon la revendication 1, dans lequel, en réponse à des entrées par un opérateur, une taille de la représentation volumétrique de la région tridimensionnelle (18A) autour de l'aéronef est configurable, de sorte que les entrées par l'opérateur augmentent ou réduisent une taille du cylindre d'affichage (18B, 218A).

4. Système d'affichage pour aéronef selon la revendication 1, dans lequel la pluralité de capteurs comprend une pluralité de blocs récepteurs radar à ondes millimétriques (MMWR) (232B, 232C, 232D) configurés pour générer des signaux de réflexion radar tridimensionnels, et dans lequel au moins un des blocs récepteurs radar MMW (232B, 232C, 232D) est configuré pour détecter des objets situés à au moins 4 km de la position en coordonnées de l'aéronef.
